# EUROPEAN PATENT SPECIFICATION

(11) **EP 1 369 293 B1**
(45) Date of publication and mention of the grant of the patent: **19.07.2006**
(21) Application number: 03076627.3
(22) Date of filing: 28.05.2003
(51) Int. Cl.: B60N 2/28

(54) **Infant vehicle seat comprising a chassis and a seat connected to the chassis, as well as such a chassis**
Fahrzeugkindersitz mit einem Untergestell und Sitz verbunden mit dem Untergestell, sowie ein solches Untergestell
Siège d'enfants pour véhicules à châssis et siège fixé au châssis, ainsi qu'un tel châssis

(30) Priority: 05.06.2002 NL 1020764
(43) Date of publication of application: 10.12.2003
(73) Proprietor: Maxi Miliaan B.V., 5705 DG Helmond (NL)
(72) Inventor: Siewertsen, Adriaan, 5691 MD Son en Breugel (NL)
(74) Representative: Dorna, Peter

(56) References cited:
- EP-A- 0 970 842
- EP-A- 0 982 182
- EP-A- 1 151 893
- DE-A- 19 744 978
- DE-A- 19 946 579
- DE-C- 19 834 861
- DE-U- 29 812 471
- FR-A- 2 782 483
- US-A- 6 109 689
- US-A1- 2001 010 431
- US-B1- 6 183 044
- US-B1- 6 375 260

## Description

The invention relates to an infant vehicle seat comprising a chassis and a seat connected to said chassis, said chassis comprising connecting elements which can be detachably connected to mounting elements present in a vehicle, which connecting elements are slidably accommodated in a slide connected to the chassis; the invention also relates to such a chassis.

The connecting elements of such an infant vehicle seat, which is known from US patent application No. 2001/0010431, are connected to bracket-like mounting elements present in a vehicle. The advantage of such bracket-like mounting elements is that they are firmly connected to the vehicle, so that an infant vehicle seat attached thereto will be firmly connected to the vehicle as well, considerably more firmly than in those cases in which the infant vehicle seat is connected to the vehicle by means of seat belts that are present in a vehicle. The connecting elements are usually positioned at the transition between the seat and a back portion of a vehicle seat. The spacing between the front side of the back portion and the mounting elements depends on the type of vehicle, among other things, and it may vary strongly in dependence on the vehicle type in question. The infant vehicle seat should be positioned as closely to the back portion and the seat portion of the vehicle seat as possible in the mounted position of the infant vehicle seat in the vehicle, thus enabling a better absorption of the forces that occur in the case of a collision. Consequently, the connecting elements are slidably accommodated in a slide connected to the chassis. In addition, the extent to which the infant's head can move will be smaller in that case. Furthermore, the space between the infant vehicle seat and a part of the vehicle present in front thereof, such as another vehicle seat, will be larger, thus reducing the risk of head contact.

Although the slidable connecting elements enable a firm attachment of the infant vehicle seat to the vehicle, the infant seat will undergo a relatively large tilting movement with respect to the mounting elements in the case of a collision.

From EP-A-1 090 804 a further child safety seat is known which comprises a base support surface adapted to rest on the seat cushion of a vehicle soat and a back support surface abutting against the backrest of said vehicle seat.

The object of the invention is to provide an infant seat which can be connected to a vehicle seat in a simple manner, whilst the infant seat will undergo a relatively small movement with respect to the mounting elements in the case of a collision.

This objective is accomplished with the infant seat according to the invention, as defined in claim 1 or 10, in that the slide is pivotally connected to the chassis.

This makes it possible to slide the connecting elements out of the slide upon attachment of the infant vehicle seat to the vehicle seat and to slide the connecting elements back into the slide again after having connected the connecting elements to the mounting elements, during which operation the chassis is moved in the direction of the mounting elements and the infant vehicle seat is pressed firmly against the vehicle seat.

In the case of a collision, the connecting elements will pivot about the mounting elements, whilst the chassis can simultaneously pivot jointly with the seat present thereon with respect to the connecting elements. This leads to an improved distribution of the forces being exerted on the infant present in the infant vehicle seat. In addition, the extent to which the infant moves will be smaller in comparison with the situation in which the chassis is rigidly connected to the connecting elements.

Further features of the invention are disclosed in the dependent claims.

0ne embodiment of an infant seat according to the invention is characterized in that the connecting elements can be moved within the slide by means of a screwed spindle mechanism, which screwed spindle mechanism is provided with a nut element and a screwed spindle which can rotate with respect to the nut element.

The use of a screwed spindle mechanism makes it possible to effect a stepless sliding movement, and a suitable selection of the pitch of the screwed spindle and the nut element makes it possible to obtain a predetermined movement, using relatively little force, with every revolution of the screwed spindle.

Another embodiment of an infant seat according to the invention is characterized in that the screwed spindle mechanism is provided with an operating element which is connected to a side of the chassis remote from the connecting elements.

In this way the screwed spindle mechanism can be operated in a simple manner from the front side of the infant vehicle seat.

Yet another embodiment of an infant seat according to the invention is characterized in that the operating element is connected to the screwed spindle by means of a telescopic rod.

This makes it possible to pull out the operating element to enable subsequent easy rotation thereof. After the desired adjustment of the connecting elements has been effected, the operating element can be telescoped back again, for example to a position in which it abuts against the chassis, so that an infant present in the infant vehicle seat will not experience any discomfort caused by the presence of the operating element.

Yet another embodiment of an infant seat according to the invention is characterized in that the nut element comprises a part of a nut, which is in spring-loaded engagement with the screwed spindle, in which said part of the nut can be moved against spring force in a direction away from the central axis of the screwed spindle.

When said part of the nut is in engagement with the screwed spindle, said part of the nut can be moved by rotating the screwed spindle. When said part of the nut is moved against spring force in a direction away from the screwed spindle, said part of the nut is disconnected from the screwed spindle, after which it can be freely moved with respect to the screwed spindle. This makes it possible to move the connecting elements completely out of the chassis or completely into the chassis, for example, in a relatively quick manner. As a result, the connecting elements can easily be moved to approximately the desired position before attaching the infant vehicle seat. Once said part of the nut has been brought into engagement with the screwed spindle, the exact desired position can be adjusted. After the infant vehicle seat has been removed from the vehicle seat, the connecting elements can be quickly moved into the chassis in the same manner, so that they will not project from the detached infant vehicle seat. This prevents damage being caused to the connecting elements and to any surrounding objects by the projecting connecting elements.

The invention will be explained in more detail hereinafter with reference to the drawing, in which:
Figure 1 is a perspective view of an infant vehicle seat according to the invention, in which the connecting elements are positioned near the chassis;
Figure 2 is a perspective view of an infant vehicle seat according to the invention, in which the connecting elements have been moved out of the chassis;
Figure 3 is a bottom view of the infant vehicle seat that is shown in Figure 1;
Figure 4 is a perspective rear view of the infant vehicle seat that is shown in Figure 2;
Figure 5 is a side elevation of the infant vehicle seat that is shown in Figure 2;
Figure 6 shows a scale division arranged on an alternative embodiment of an infant vehicle seat according to the invention;
Figure 7 is a perspective view of a part of a slide connected to a chassis of the infant seat that is shown in Figure 1, and of connecting pieces that are slidably connected thereto;
Figure 8 is a perspective view of a part of the construction that is shown in Figure 7;
Figure 9 shows the construction of Figure 7, in which the connecting pieces have been moved with respect to the slide;
Figure 10 is a perspective view of a part of the chassis of the infant vehicle seat that is shown in Figure 1;
Figure 11 shows the part of the infant vehicle seat according to the invention that is shown in Figure 10, in which the cables that can be distinguished therein have been tensioned; and
Figure 12 shows the infant seat of Figure 1 during a collision.

Corresponding parts are indicated by the same numerals in the Figures.

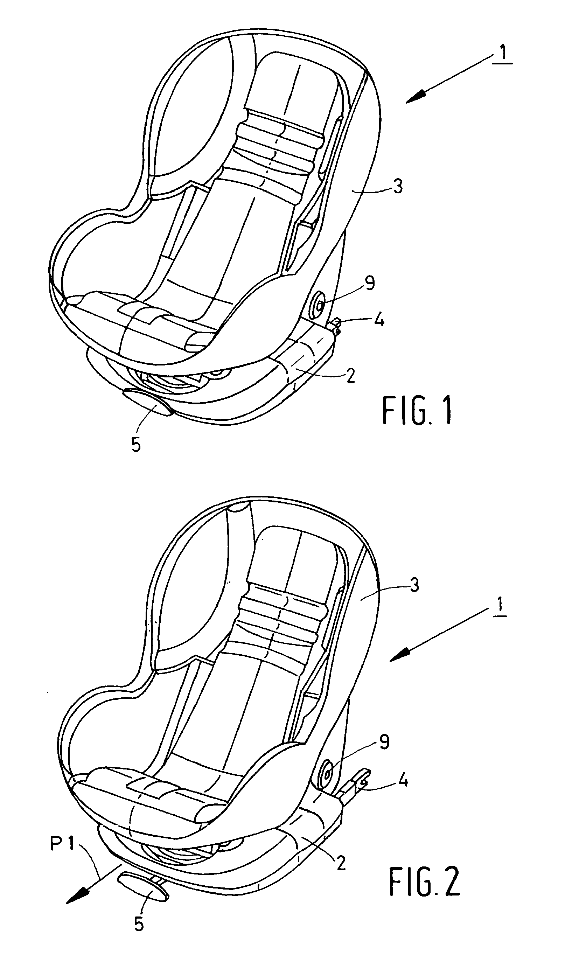

Figure 1 is a perspective view of an infant vehicle seat 1 according to the invention, comprising a chassis 2 and a seat 3 which is pivotally connected thereto. Since the seat 3 is pivotally connected to the chassis, the seat 3 can be placed in any desired position relative to the chassis 2.

The infant vehicle seat 1 comprises connecting elements 4, which extend in a direction away from the seat on either side of the chassis 2. The connecting elements 4 can be detachably connected, using means that are known per se, to mounting means present in a vehicle seat, which mounting means usually comprise U-shaped brackets.

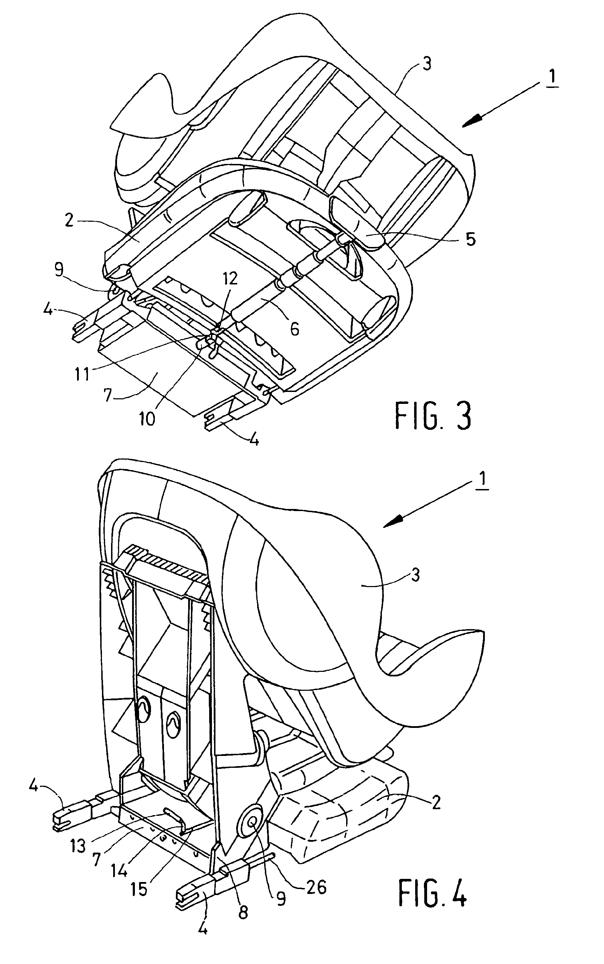

The infant vehicle seat 1 furthermore comprises an operating element 5, which is positioned on a side of the chassis 2 remote from the connecting elements 4. As will be explained in more detail yet, the operating element 5 can be moved in the direction indicated by the arrow P1, from the storage position shown in Figure 1 to the operating position shown in Figure 2, by means of a telescopic rod 6 (see Figure 3).

Figure 3 is a perspective bottom view of the infant vehicle seat 1 that is shown in Figure 1, whilst Figure 4 is a rear view of the infant vehicle seat 1 that is shown in Figure 2. The infant vehicle seat 1 comprises a slide 7, which is pivotally connected to the chassis 2 about pivot pins 9 via upright flanges 8 positioned on either side of the slide 7. As Figure 3 shows, a pin 10 having a square end 11 extends from the slide 7. Said square end 11 is detachably connected to a U-shaped recess 12 formed in an end of the telescopic rod 6 remote from the operating element 5.

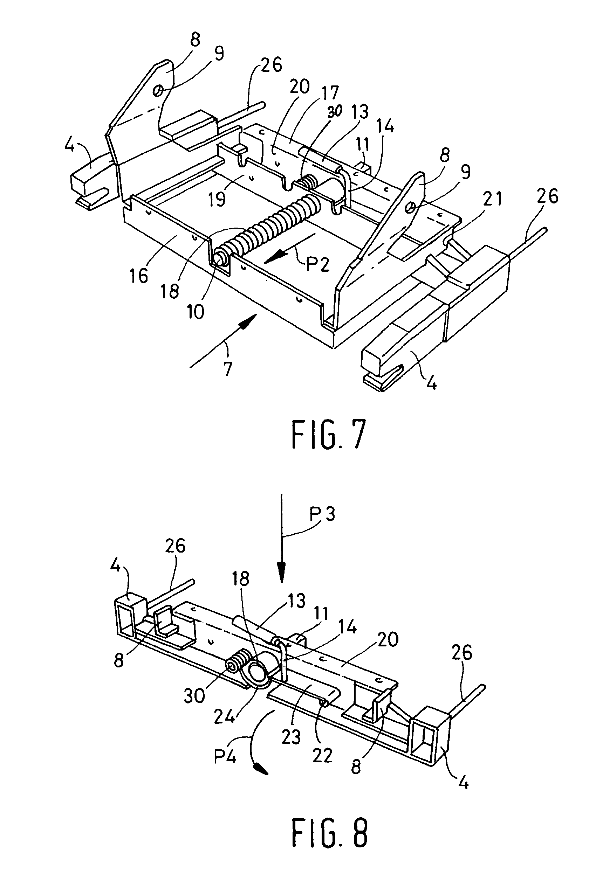

As Figure 4 shows, the slide 7 is provided with horizontally extending handle 13, with a vertically extending rod 14 thereof, which is connected thereto, extending through a slot 15 present in the slide 7. The function of the handle 13 will be explained in more detail yet with reference to Figures 7 - 9.

Figures 7 - 9 are perspective views of parts of the slide 7, showing various positions thereof.

The slide 7 comprises two plate members 16, 17 extending parallel to each other, which are connected to the flanges 8. The pin 10 extends between said plate members 16, 17, with the square end 11 of the pin 10 being located on a side of the plate member 17 remote from the plate member 16. The pin 10 is provided with a screwed spindle 18 between the plate members 16, 17. The slide 7 furthermore comprises two plate members 19, 20 extending parallel to the plate members 16, 17, which plate members 19, 20 are connected to the connecting elements 4 with their ends. Near the flanges 8, the plate members 19, 20 are provided with hook-shaped slots 21, through which the plate members 19, 20 are connected to the flanges 8, being movable in the direction indicated by arrow P2 and in the opposite direction.

As Figure 8 shows a lip 23 being pivotable about a pin 22 is disposed between the plate members 19, 20, which lip being provided, on a side remote from the pin 22, with a half nut 24 being bisected along the central axis thereof. The lip 23 forms a leaf spring, so that the half nut 24 is in spring-loaded engagement with the screwed spindle 18 in the position that is shown in Figure 8.

The rod 14 connected to the handle 13 abuts against the lip 23 on a side remote from the handle 13. When the handle 13 is pressed down in the direction indicated by the arrow P3, the lip 23 will be pivoted against spring force about the pin 22 in the direction indicated by the arrow P4, as a result of which the half nut 24 will be disconnected from the screwed spindle 18. As soon as the handle 13 is released, the half nut 24 will be moved into engagement with the screwed spindle 18 again by the action of the springing lip 23.

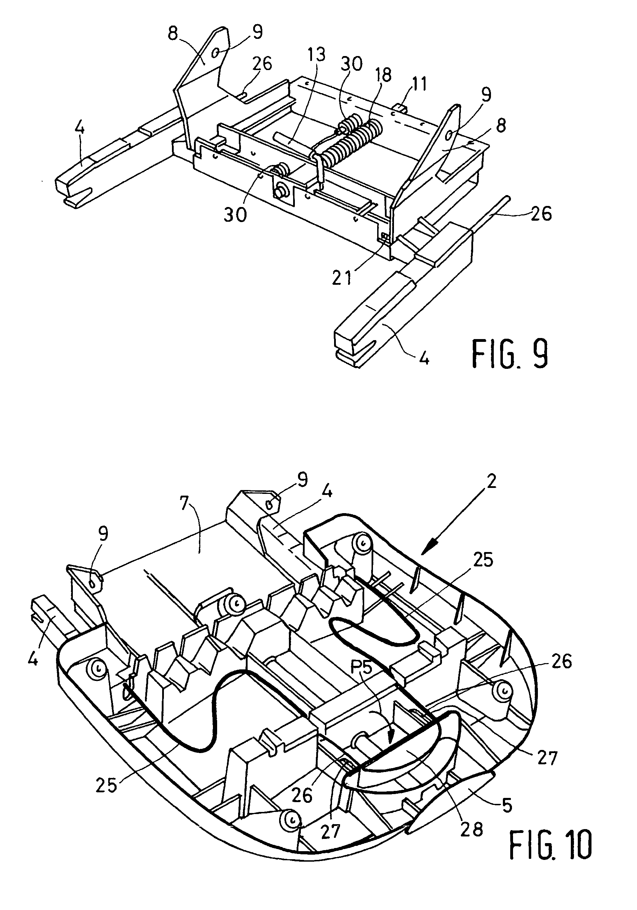

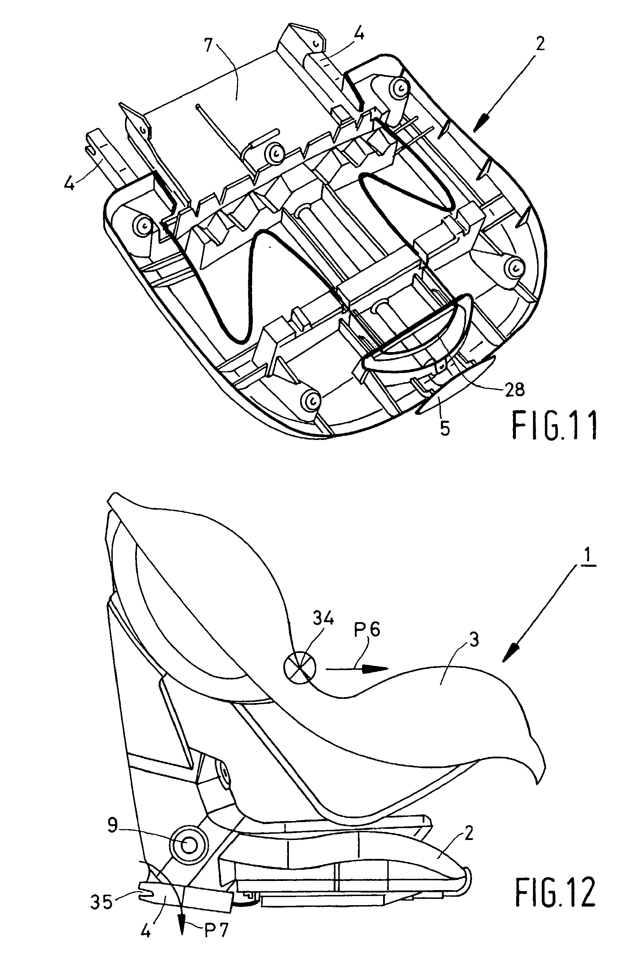

Figures 10 and 11 are sectional views of the chassis 2, which comprises two tubes 25 housing cables 26. The cables 26 are each connected to the connecting elements 4 with a first end, and to a handle 28, which is pivotable in the direction indicated by the arrow P5, with a second end.

The operation of the infant vehicle seat 1 will now be briefly explained. A user takes hold of the operating element 5 of an infant vehicle seat 1 to be positioned in a vehicle and pulls it from the position that is shown in Figure 1 to the operative position that is shown in Figure 2. The telescopic rod 6 is extended during said movement. Subsequently, the operating element 5 is rotated about the axis of the telescopic rod 6, causing the screwed spindle 18 to rotate as a result of the connection between the telescopic rod 6 and the pin 10. As a result, the half nut 24, the plate members 19, 20 connected thereto and the connecting elements 4 connected thereto will be moved in the direction indicated by the arrow P2 (Figure 7), for example to the position that is shown in Figure 9. In this extended position of the connecting elements 4, the connecting elements 4 can easily be attached to mounting means present in a vehicle. Such a connection between connecting elements 4 and mounting elements is known per se and will not be discussed in more detail herein, therefore.

The operating element 5 is then rotated in the opposite direction, as a result of which the half nut 24 and the connecting elements 4 connected thereto are moved in the opposite direction of the arrow P2, with the slide 7, the chassis 2 connected to the slide 7 via pivot pins 9 and the seat 3 connected to the chassis 2 being moved in the direction of the vehicle seat and being pressed against said seat. The presence of the screwed spindle mechanism makes it possible to effect a relatively large movement of the infant vehicle seat 1 in the direction of the vehicle seat, and thus press the infant seat firmly against the vehicle seat, while exerting only a relatively small force on the operating element 5.

When the infant vehicle seat 1 is to be removed from the vehicle, the handle 28 (Figures 10, 11) is pivoted in the direction indicated by the arrow P5 from the position indicated in Figure 10 to the position that is shown in Figure 11, as a result of which a pulling force is exerted on the cables 26, causing the connecting elements 4 to become detached from the mounting means present in the vehicle. The infant vehicle seat 1 can now be lifted from the vehicle.

In order to prevent the connecting elements 4 projecting from the chassis 2 or surrounding objects from being damaged, the connecting elements 4 are preferably moved back into the chassis 2 again. This can be effected through rotation of the operating element 5. In order to slide the connecting elements 4 quickly into the chassis 2, it is more convenient, however, to move the handle 13, which is accessible from the rear side of the infant vehicle seat 1, in the direction indicated by the arrow P3, as a result of which the half nut 24 is disconnected from the screwed spindle 18. The connecting elements 4 can now be manually moved in the opposite direction of the arrow P2. It is also possible, however, to effect the return movement by means of a tension spring 30 (see Figures 7 - 9). It is also possible, of course, to slide the connecting elements 4 from the chassis 2 in this manner.

In order to further facilitate the adjustment of the connecting elements 4 relative to the chassis 2, the infant vehicle seat 1 may be provided with a scale division 31, which may be arranged partially on the chassis 2 and partially on the connecting elements 4. Once the user has gained some experience, he will know what position of the connecting elements 4 with respect to the chassis 2 is required in order to effect a simple connection to the mounting elements present in the vehicle in question without having to carry out a relatively large movement of the chassis 2 by means of the screwed spindle mechanism after having effected said connection. According to another possibility, a table is supplied with the infant vehicle seat 1, which table indicates a desired distance 32 for each type of vehicle, which distance is a measure for the extent to which the infant vehicle seat 1 must be pressed into a back portion 33 of a vehicle seat in order to realise a firm connection between the infant vehicle seat 1 and the vehicle seat without any risk of the vehicle seat being damaged.

According to another possibility, a list may be made of vehicles with the associated numbers on the scale division on the connecting elements, in which list the desired bias has been taken into account already.

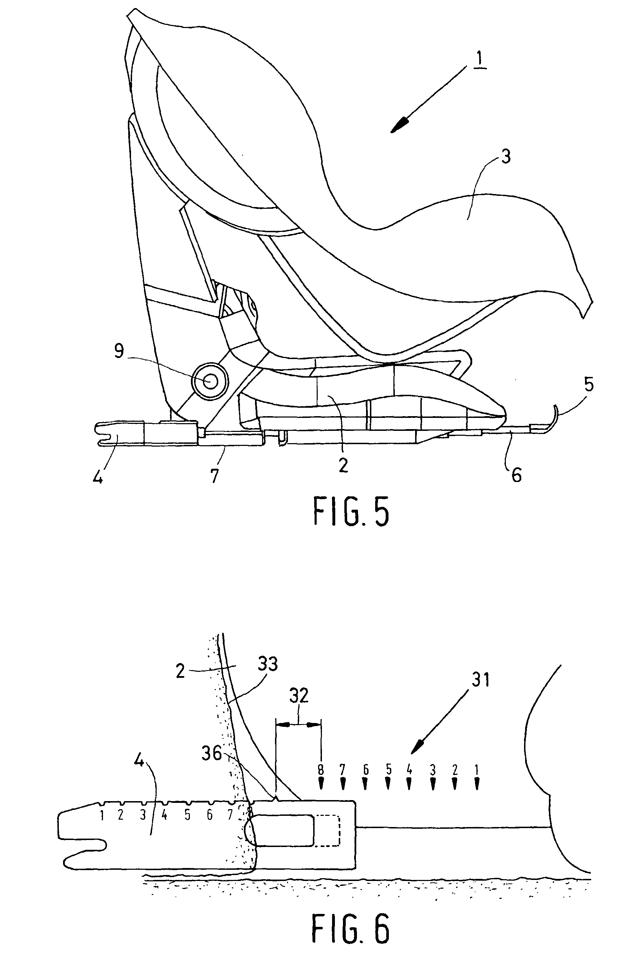

According to another possibility, the last number on the scale division on the connecting element 4 that is just visible (number 8 in Figure 6) is read, and the chassis 2 is subsequently moved towards the back portion 33 until the same number, in this case number 8, therefore, on the chassis 2 is aligned with a mark 36 on the connecting element 4. In this way the same bias will be obtained at all times.

Figure 12 shows the situation in which a relatively large force is exerted on the infant vehicle seat 1, as a result of which the centre of mass 34 of the infant vehicle seat 1 and an infant present therein attempts to shift in the direction indicated by the arrow P6. The forces that occur will cause the connecting elements 4 to pivot in the direction indicated by the arrow P7 about the mounting brackets 35 of the vehicle, resulting in pivoting movement of the chassis 2, the seat 3 connected thereto and a child present therein about pins 9 with respect to the connecting elements 4. During the pivoting movement of the connecting elements 4 with respect to the chassis 2, the square end 11 is tilted from the U-shaped recess 12 of the telescopic rod 6, so that no damage will be caused to the telescopic rod 6 or the pin 10 with the screwed spindle 18. Once the connecting elements 4 have returned to the position illustrated in Figures 1, 2, the connection between the pin 10 and the telescopic rod 6 will be restored as a result of the square end 11 and the square recess 12 engaging each other.

A different connection enabling pivoting movement but no torsional movement may be realised between the rod 6 and the screwed spindle 18, for example by using leaf springs. It is also possible to design the connection so that it will shear off easily in the case of a collision and can be replaced without difficulty.

Instead of using a tiltable handle, it is possible to use a handle which is capable of translating movement for operating the cables.

Furthermore it is possible to mount a compression spring rather than a springing lip 23 (see again Figure 8) on the side of the half nut remote from the screwed spindle for pressing the half nut against the screwed spindle.

## Claims

1. An infant vehicle seat (1) comprising a chassis (2) and a seat (3) connected to said chassis (2), said chassis (2) comprising connecting elements (4) which can be detachably connected to mounting elements present in a vehicle, which connecting elements (4) are slidably accommodated in a slide (7) connected to the chassis (2), **characterized in that** the slide (7) is pivotally (9) connected to the chassis (2).

2. An infant vehicle seat (1) according to claim 1, **characterized in that** an operating element connected to the chassis (2) can be detachably connected to the slide (7).

3. An infant vehicle seat (1) according to claim 1 or 2, **characterized in that** the connecting elements (4) can be moved within the slide (7) by means of a screwed spindle mechanism, which screwed spindle mechanism is provided with a nut element (24) and a screwed spindle (18) which can rotate with respect to the nut element (24).

4. An infant vehicle seat (1) according to claim 3, **characterized in that** the screwed spindle mechanism is provided with the operating element (5), which is connected to a side of the chassis (2) remote from the connecting elements (4).

5. An infant vehicle seat (1) according to claim 4, **characterized in that** the operating element (5) is connected to the screwed spindle (18) by means of a telescopic rod (6).

6. An infant vehicle seat (1) according to any of claims 3 to 5, **characterized in that** the nut element (24) comprises a part of a nut, which is in spring-loaded engagement with the screwed spindle (18), in which said part of the nut can be moved against spring force in a direction away from the central axis of the screwed spindle (18).

7. An infant vehicle seat (1) according to claim 6, **characterized in that** said part of the nut can be moved against spring force in a direction away from the central axis of the screwed spindle (18) by means of a handle (13) positioned near the connecting elements (4).

8. An infant vehicle seat (1) according to any one of the preceding claims, **characterized in that** the connecting elements (4) are connected to cables (26), by means of which the connecting elements (4) can be disconnected from the mounting elements, said cables (26) being connected to an unlocking mechanism on a side remote from the connecting elements (4).

9. An infant vehicle seat (1) according to claim 8, **characterized in that** said unlocking mechanism comprises a flange which pivots about a pin (6), which flange is positioned on a side of the infant vehicle seat (1) remote from the connecting elements (4).

10. A chassis (2) comprising connecting elements (4) which can be detachably connected to mounting elements present in a vehicle, which connecting elements (4) are slidably accommodated in a slide (7) connected to the chassis (2), **characterized in that** the slide (7) is pivotally (9) connected to the chassis (2).

11. A chassis (2) according to claim 10, **characterized in that** the chassis (2) is provided with a scale division, which indicates the movement of the connecting elements (4) with respect to the chassis (2).

## Patentansprüche

1. Fahrzeug-Kindersitz (1), der ein Gestell (2) und einen mit dem genannten Gestell (2) verbundenen Sitz (3) umfasst, wobei das genannte Gestell (2) Verbindungselemente (4) umfasst, die lösbar mit im Fahrzeug vorhandenen Befestigungselementen verbunden werden können, wobei die Verbindungselemente (4) verschiebbar in einem mit dem Gestell (2) verbundenen Schlitten (7) untergebracht sind, **dadurch gekennzeichnet, dass** der Schlitten (7) drehbar (9) mit dem Gestell (2) verbunden ist.

2. Fahrzeug-Kindersitz (1) nach Anspruch 1, **dadurch gekennzeichnet, dass** ein mit dem Gestell (2) verbundenes Betätigungselement lösbar mit dem Schlitten (7) verbunden werden kann.

3. Fahrzeug-Kindersitz (1) nach Anspruch 1 oder 2, **dadurch gekennzeichnet, dass** die Verbindungselemente (4) mithilfe eines Schraubspindelmechanismus in dem Schlitten (7) bewegt werden können, wobei der Schraubspindelmechanismus mit einem Mutterelement (24) und einer Schraubspindel (18), die sich in Bezug auf das Mutterelement (24) drehen kann, versehen ist.

4. Fahrzeug-Kindersitz (1) nach Anspruch 3, **dadurch gekennzeichnet, dass** der Schraubspindelmechanismus mit dem Betätigungselement (5) versehen ist, das an einer von den Verbindungselementen (4) fernen Seite des Gestells (2) montiert ist.

5. Fahrzeug-Kindersitz (1) nach Anspruch 4, **dadurch gekennzeichnet, dass** das Betätigungselement (5) durch eine Teleskopstange (6) mit der Schraubspindel (18) verbunden ist.

6. Fahrzeug-Kindersitz (1) nach einem der Ansprüche 3 bis 5, **dadurch gekennzeichnet, dass** das Mutterelement (24) einen Mutterteil umfasst, der mit der Schraubspindel (18) in federbelastetem Eingriff steht, wobei der genannte Mutterteil gegen die Federkraft in einer Richtung weg von der Mittelachse der Schraubspindel (18) bewegt werden kann.

7. Fahrzeug-Kindersitz (1) nach Anspruch 6, **dadurch gekennzeichnet, dass** der genannte Mutterteil durch einen in der Nähe der Verbindungselemente (4) positionierten Griff (13) gegen Federkraft in einer Richtung weg von der Mittelachse der Schraubspindel (18) bewegt werden kann.

8. Fahrzeug-Kindersitz (1) nach einem der vorhergehenden Ansprüche, **dadurch gekennzeichnet, dass** die Verbindungselemente (4) mit Seilzügen (26) verbunden sind, mittels derer die Verbindungselemente (4) von den Befestigungselementen getrennt werden können, wobei die genannten Seilzüge (26) mit einem Öffnungsmechanismus auf einer von den Verbindungselementen (4) fernen Seite verbunden sind.

9. Fahrzeug-Kindersitz (1) nach Anspruch 8, **dadurch gekennzeichnet, dass** der genannte Öffnungsmechanismus einen Ansatz umfasst, der sich um einen Bolzen (6) dreht, wobei der Ansatz auf einer von den Verbindungselementen (4) fernen Seite des Fahrzeug-Kindersitzes (1) positioniert ist.

10. Gestell (2), das Verbindungselemente (4) umfasst, die lösbar mit in einem Fahrzeug vorhandenen Befestigungselementen verbunden werden können, wobei die Verbindungselemente (4) verschiebbar in einem mit dem Gestell (2) verbundenen Schlitten (7) untergebracht sind, **dadurch gekennzeichnet, dass** der Schlitten (7) drehbar (9) mit dem Gestell (2) verbunden ist.

11. Gestell (2) nach Anspruch 10, **dadurch gekennzeichnet, dass** das Gestell (2) mit einer Skaleneinteilung versehen ist, die die Bewegung der Verbindungselemente (4) in Bezug auf das Gestell (2) anzeigt.

## Revendications

1. Siège d'enfant pour véhicules (1) comprenant un châssis (2) et un siège (3) connecté audit châssis (2), ledit châssis (2) comprenant des éléments de connexion (4) qui peuvent être connectés de façon détachable à des éléments de montage présents dans un véhicule, lesdits éléments de connexion (4) étant logés en coulissement dans un coulisseau (7) connecté au châssis (2), **caractérisé en ce que** le coulisseau (7) est connecté en pivotement (9) au châssis (2).

2. Siège d'enfant pour véhicules (1) selon la revendication 1, **caractérisé en ce qu'**un élément d'actionnement connecté au châssis (2) peut être connecté de façon détachable au coulisseau (7).

3. Siège d'enfant pour véhicules (1) selon la revendication 1 ou 2, **caractérisé en ce que** les éléments de connexion (4) peuvent être déplacés à l'intérieur du coulisseau (7) au moyen d'un mécanisme à broche filetée, ledit mécanisme à broche filetée étant pourvu d'un élément formant écrou (24) et d'une broche filetée (18) qui peut tourner par rapport à l'élément formant écrou (24).

4. Siège d'enfant pour véhicules (1) selon la revendication 3, **caractérisé en ce que** le mécanisme à broche filetée est pourvu de l'élément d'actionnement (5), lequel est connecté à un côté du châssis (2) éloigné des éléments de connexion (4).

5. Siège d'enfant pour véhicules (1) selon la revendication 4, **caractérisé en ce que** l'élément d'actionnement (5) est connecté à la broche filetée (18) au moyen d'une barre télescopique (6).

6. Siège d'enfant pour véhicules (1) selon l'une quelconque des revendications 3 à 5, **caractérisé en ce que** l'élément formant écrou (24) comprend une partie d'un écrou qui est engagée sous la charge d'un ressort avec la broche filetée (18), et dans lequel ladite partie d'écrou peut être déplacée à l'encontre de la force du ressort dans une direction qui s'éloigne de l'axe central de la broche filetée (18).

7. Siège d'enfant pour véhicules (1) selon la revendication 6, **caractérisé en ce que** ladite partie d'écrou peut être déplacée à l'encontre de la force du ressort dans une direction qui s'éloigne de l'axe central de la broche filetée (18) au moyen d'une manette (13) positionnée à proximité des éléments de connexion (4).

8. Siège d'enfant pour véhicules (1) selon l'une quelconque des revendications précédentes, **caractérisé en ce que** les éléments de connexion (4) sont connectés à des câbles (26), au moyen desquels les éléments de connexion (4) peuvent être déconnectés depuis les éléments de montage, lesdits câbles (26) étant connectés à un mécanisme de déverrouillage sur un côté éloigné des éléments de connexion (4).

9. Siège d'enfant pour véhicules (1) selon la revendication 8, **caractérisé en ce que** ledit mécanisme de déverrouillage comprend une bride qui pivote autour d'une tige (6), ladite bride étant positionnée sur un côté du siège d'enfant pour véhicules (1) éloigné des éléments de connexion (4).

10. Châssis (2) comprenant des éléments de connexion (4) qui peuvent être connectés de façon détachable à des éléments de montage présents dans un véhicule, lesdits éléments de connexion (4) étant logés en coulissement dans un coulisseau (7) connecté au châssis (2), **caractérisé en ce que** le coulisseau (7) est connecté en pivotement (9) au châssis (2).

11. Châssis (2) selon la revendication 10, **caractérisé en ce que** le châssis (2) est pourvu d'une division formant échelle, qui indique le mouvement des éléments de connexion (4) par rapport au châssis (2).
